# EUROPÄISCHE PATENTSCHRIFT

(11) **EP 1 431 659 B1**
(45) Veröffentlichungstag und Bekanntmachung des Hinweises auf die Patenterteilung: **04.04.2007**
(21) Anmeldenummer: 03027803.0
(22) Anmeldetag: 03.12.2003
(51) Int. Cl.: F23J 13/04, F16L 59/18, F16L 39/00

(54) **Stecksystem für Rohrverbindungen mit nichtlinearen kontinuierlichen Abschnitten**
Connection system for pipes having a non linear continuous diameter end
Connection pour tuyaux possédant une extremité à diamètre non cylindrique mais continu

(30) Priorität: 21.12.2002 DE 10260563
(43) Veröffentlichungstag der Anmeldung: 23.06.2004
(73) Patentinhaber: eka edelstahlkamine gmbh, 95369 Untersteinach (DE)
(72) Erfinder: Böhm, Jürgen, 95152 Selbitz (DE)
(74) Vertreter: Molnia, David

(56) Entgegenhaltungen:
- EP-B- 0 286 488
- EP-B- 0 798 513
- DE-A- 19 519 073
- DE-C- 810 906
- DE-U- 9 101 262
- US-B1- 6 253 712

## Beschreibung

Die Erfindung betrifft ein Stecksystem für Rohrverbindungen mit nichtlinearen kontinuierlichen Abschnitten zur Verwendung im industriellen, häuslichen sowie im automobilen Bereich.

Auf dem Gebiet der Haustechnik sind insbesondere im Bereich der Abgasanlagen und der Lüftungs- und Klimatechnik Stecksystem für Rohrverbindungen zur Zu- und / oder Ableitung von Gasen im Einsatz. Ebenso sind Stecksystem für Rohrverbindungen im Automobilbau und auch im stationären Bereich, wie z.B. bei Blockheizkraftwerken, wo Abgase aus einem Motor abgeleitet werden, im Einsatz.

Insbesondere die Ableitung von aggressiven Gasen, wie z.B. Abgasen aus Verbrennungsanlagen, stellt hohe Anforderungen an die Dichtigkeit des Rohrsystems.

Typische Verbrennungsanlagen sind Wärmeerzeugungsanlagen und Motoren, wie sie zur Warmwasserbereitung, zu Heizzwecken, zur Stromerzeugung, zu Antriebszwecken, als Blockheizkraftwerke oder ähnlichem im häuslichen, industriellen sowie im automobilen Bereich zur Anwendung kommen.

Ein weiterer Einsatzbereich dieser Rohrsysteme ist die Zuleitung von Gasen, z.B. von Frischluft. Solche Anlagen können in jedem Bereich zur Anwendung kommen, also insbesondere auch in der Klimatechnik, z.B. auch für Klimaanlagen im häuslichen und industriellen Bereich.

Stecksysteme eignen sich sowohl für den Neubau als auch die Sanierung und Reparatur von Altanlagen.

Weiterhin können diese Anlagen auch kombiniert zur Anwendung kommen, z.B. zur gleichzeitigen Führung von zwei Gasen, beispielsweise kann über das Außenrohr, eine Heizungsanlage mit Verbrennungsluft versorgt werden, während das Innenrohr das Abgas / die Abluft ableitet.

Bei der Sanierung von Kaminen beispielsweise wird kaminseitig ein Kaminrohr bestehend aus mehreren Rohrabschnitten in den Kaminschacht eingebracht. Ein sich gegebenenfalls zwischen dem eingebrachten Kaminrohr und einem in den Kaminschacht eingebrachten Außenrohr ergebender Zwischenraum kann mit Isoliermaterial versehen werden.

Weiterhin können die Systeme auch doppelwandig vormontiert ausgeführt sein und mit isolierenden Material vorgesehen sein.

Typische Isolationsmaterialien sind z.B. Mineralfasern, Keramikgewebe, Keramikflies, oder dergleichen hergestellt.

Systeme, die z.B. in der Abgastechnik verwendet werden, sind beispielsweise aus den Europäischen Patenten EP 0 780 635 B1, EP 0 286 488 B1 und EP 0 798 513 B1, der Europäischen Patentanmeldung EP 1 188 979 A2, der Deutschen Offenlegungsschrift DE 195 19 073 A1 sowie dem Deutschen Gebrauchsmuster DE 91 01 262 U1 bekannt.

Das Europäische Patent EP 0 780 635 B1 betrifft ein Kaminrohr für die Schornsteinsanierung aus mehreren Rohrabschnitten, die jeweils ein konisch erweitertes Ende und ein konisch verjüngtes Ende mit gleichen Konuswinkeln aufweisen und die durch Einstecken des verjüngten Endes in das erweiterte Ende miteinander verbindbar sind. Diese konischen Abschnitte haben jedoch die Eigenschaft empfindlich auf Beschädigungen, wie z.B. Transportschäden, zu reagieren, da die linear Fläche bei Beschädigungen einen erwünschten Formschluss nicht länger zulässt.

Ähnliche Systeme sind aus den Europäischen Patenten EP 0 286 488 B1 und EP 0 798 513 B1 und der Deutschen Offenlegungsschrift DE 195 19 073 A1 bekannt.

Weiterhin weisen die bisherigen System das Problem auf, das Rohre die in ihren Achsen nicht kollinear sind, nicht zuverlässig dichtend aufgebaut werden können, da das Einführen eines nicht kollinearen Rohrendes zu einer Verformung der Konen und damit zu einer Verletzung der Dichtigkeitsanforderung führen kann.

Weiterhin wirkt bei diesen Rohrelementen bei einer vertikalen Verbindung nur das Gewicht der oberhalb der jeweils betrachteten Rohrverbindungen angeordneten Rohrelemente stabilisierend auf die Steckverbindung. Für den Fall jedoch, dass sich die betrachtete Rohrverbindung im oberen Bereich befindet, kann es sein, dass die zur Verfügung stehende Gewichtskraft der oberhalb befindlichen Rohrelemente nicht mehr zu einer Stabilisierung der Rohrverbindung ausreicht.

Weiterhin stellen konische Rohrelemente bei einem Konuswinkel der 7° übersteigt, wegen des geringen Reibschlusses, keine Selbsthemmung mehr zur Verfügung.

Wegen der axialen Ausrichtung der Abschnitte kommt es bei einer horizontalen Verbindung infolge der Schwerkraft der einzelnen Rohrelemente zu einer Verformung im Abschnitt der Rohrabschnitte und dadurch ist die geforderte Dichtigkeit nicht mehr gewährleistet.

Das Deutsche Gebrauchsmuster DE 91 01 262 U1 offenbart eine Einrichtung, die ein einfaches Anschließen eines Gerätes an einen fest angeordneten Leitungsabschnitt ermöglichen soll. Hierzu wird in mehrstückiges Zwischenglied vorgeschlagen, bei dem die inneren Stückenden der Leitungsabschnitte ballig ausgebildet sein können. Der Endbereich dieser ballig ausgebildeten Enden wird in ballig ausgebildeten Enden der zu verbindenden Leitungsabschnitte gehalten.

Dabei stellt der innere Teil des mehrstückigen Zwischenstücks ein Kugelgelenk dar. Ein Kugelgelenk erfordert ein Übergreifen, da nur so eine Halterung realisiert werden kann. Eine solche Halterung widerspricht jedoch einem Stecksystem, denn das innere Rohr muss nach dem Einführen von innen umgeformt werden, um eine solche Halterung zu ermöglichen. Ein solches System stellt dann aber kein Stecksystem mehr dar.

Die bekannten Systeme zeigen sich bezüglich ihrer Dichtigkeit als problematisch. Prinzipbedingt erreichen sie nur eine unzureichende flächenhafte Dichtung durch eine flächenhafte konische Pressung, die durch weitere Maßnahmen erhöht werden muss.

Dieses Problem wird zum einen dadurch angegangen, dass Dichtungsmaterialien, wie z.B. Dichtringe, Dichtlippen oder Dichtpasten, eingesetzt werden, zum anderen dadurch dass zusätzliche Klemmelemente, wie z.B. Rohrschellen, eingesetzt werden, um die geforderte Dichtigkeit zu erreichen.

Im Bereich der Abgastechnik werden zudem hohe Anforderungen gestellt, da hier Temperaturen von über 600° C und Drücke über 50 hPa auftreten können. Weiterhin enthalten die Abgase aggressive Bestandteile, wie z.B. SO₂, SO₃, NO, NO₂, NO₃. Lösen sich diese in Wasser, das auch in Form von Wasserdampf Bestandteil der Verbrennungsluft ist, so bildet sich ein höchst aggressives Kondensat.

Bei diesen Anforderungen sind bekannte Dichtmaterialien wie z.B. Kautschuke auf Silikonbasis oder Fluorbasis nicht oder nur mit Einschränkungen verwendbar, da diese durch schweflige Bestandteile, wie z.B. schweflige Säure oder Schwefelsäure, und / oder salpetrige Bestandteile, wie z.B. salpetrige Säure oder Salpetersäure, in den Abgasen bzw. dem Kondensat der Verbrennungsluft angegriffen und sogar durch Aufkonzentration zerstört werden können.

Zur Gewährleistung der Dichtheit werden daher die Dichtigkeit unterstützenden Elementen, wie z.B. Rohrschellen, benötigt.

Die Europäischen Patentanmeldung EP 1 188 979 A2 betrifft eine Rohrverbindung, die zusätzlich zu der bereits bekannten Verbindungseinrichtung eine Vorspanneinrichtung in Form von Federbügeln aufweist, dergestalt, dass in deren Wirkstellung eine in Achsenrichtung wirkende Haltekraft auf die Rohrleitungsabschnitte ausgeübt wird.

Rohrschellen oder diesen ähnlichen Elemente wirken radial auf die Rohrverbindung. Eine axiale Sicherung der Verbindung können diese nur unzureichend erreichen.

Weiterhin erfordert die Montage entsprechender Elemente zum einen Werkzeug, zum anderen auch den nötigen Freiraum, um die Elemente dauerhaft anbringen zu können. Dieser Umstand ist insbesondere bei Sanierungen nicht immer gegeben.

Weiterhin gibt es die Möglichkeit, die Rohrelemente mechanisch beim Aufbau durch Einsatz von entsprechenden Montagewerkzeug durch Formänderung aufzuweiten und zu verbinden. Darüber hinaus besteht die Möglichkeit einer dauerhaften Verbindung der Rohrelemente. Diese Alternativen erschweren jedoch etwaige spätere Reparaturen oder eine Sanierung erheblich.

Der Erfindung liegt die Aufgabe zugrunde, ein Stecksystem für Rohrverbindungen zur Verfügung zu stellen, dass eine zuverlässige Dichtung bietet. Es ist weiterhin Aufgabe der Erfindung, ein Stecksystem für Rohrverbindungen zur Verfügung zu stellen, das einfach montierbar ist. Es ist weiterhin Aufgabe der Erfindung, ein Stecksystem für Rohrverbindungen zur Verfügung zu stellen, das sowohl bei horizontaler als auch vertikaler Verwendung dichtet. Es ist weiterhin Aufgabe der Erfindung ein Stecksystem für Rohrverbindungen zur Verfügung zu stellen, dass auf den Einsatz weiterer die Dichtigkeit unterstützender Mittel verzichtet oder minimiert. Es ist weiterhin Aufgabe der Erfindung ein Stecksystem für Rohrverbindungen bereit zu stellen, dass auch nicht kollineare Rohrverbindungen mit einer zuverlässigen Dichtigkeit und einer besseren Selbsthemmung zur Verfügung stellt.

Die Aufgaben werden durch ein Stecksystem für Rohrverbindungen gelöst, wobei ein Ende eines einwandigen Rohrs als Einsteckteil und ein Ende eines einwandigen Rohrs als Muffenteil ausgebildet ist, und sowohl das Einsteckteil als auch das Muffenteil einen nichtlinearen kontinuierlichen Abschnitt aufweisen.

Das Einsteckteil ist das Endstück eines Rohres und weist ein erweitertes Ende auf.

Die Ausgestaltung der Aufweitung auf das erweiterte Ende kann in geeigneter Weise erfolgen. Beispielsweise kann die Aufweitung abschnittsweise linear sein, jedoch ist auch jeder andere Gestaltung möglich, beispielsweise ein nichtlinearer, kontinuierlicher Verlauf.

An die Aufweitung schließt sich ein nichtlinearer kontinuierlicher Abschnitt an. Die Gestaltung des nichtlinearen kontinuierlichen Abschnitts kann dabei unterschiedliche Formen aufweisen.

Bevorzugt weist der nichtlineare kontinuierliche Abschnitt eine konstante Krümmung auf, es wäre jedoch auch möglich eine sich kontinuierlich ändernde, z.B. eine sich monoton ändernde Krümmung vorzusehen.

Das Muffenteil ist das Endstück eines Rohrs und weist ein erweitertes Ende auf.

Die Ausgestaltung der Aufweitung auf das erweiterte Ende kann in geeigneter Weise erfolgen. Beispielsweise kann die Aufweitung abschnittsweise linear sein, jedoch ist auch jeder andere Gestaltung möglich, beispielsweise ein nichtlinearer kontinuierlicher Verlauf.

An die Aufweitung schließt sich ein nichtlinearer kontinuierlicher Abschnitt an. Die Gestaltung des nichtlinearen kontinuierlichen Abschnitt kann wiederum dabei unterschiedliche Formen aufweisen.

Bevorzugt weist auch dieser nichtlineare kontinuierliche Abschnitt eine konstante Krümmung auf, es wäre jedoch auch möglich eine sich kontinuierlich ändernde, z.B. eine sich monoton ändernde Krümmung vorzusehen.

Weiterhin kann das Muffenteil eine Aufnahme am oberen Ende aufweisen. Die Ausgestaltung der Aufnahme kann in geeigneter Weise erfolgen Beispielsweise kann die Aufnahme abschnittsweise linear sein, jedoch ist auch jede andere Gestaltung möglich, beispielsweise ein nichtlinearer, kontinuierlicher Verlauf.

Durch Wahl eines nichtlinearen kontinuierlichen Abschnitts ergibt sich, dass in allen Punkten auf dem Abschnitt beim Anliegen eines Einsteckteils eines Rohres an dem entsprechenden Muffenteil eines Rohres sowohl eine axiale als auch eine radiale Kraftkomponente vorhanden ist, die sich von benachbarten Punkt unterscheidet.

Bei einem linearen Verlauf dieses Abschnitts, d.h. wenn der Abschnitt konisch wäre, würde in allen Punkten des Abschnitts die selben Kraftkomponenten in axialer und radialer Richtung wirken.

Durch Wahl einer formschlüssigen Ausgestaltung wird eine mindestens linienhafte metallische Dichtung erreicht. Die linienhafte Dichtung ergibt sich durch das Aneinanderliegen des Einsteckteils am Muffenteil mit einer bestimmten normal zur Fläche wirkenden Kraft. Dadurch ergibt sich mindestens ein geschlossener umfänglicher Linienzug, ab dem die Dichtheit erreicht ist. Im Normalfall werden sich eine Vielzahl von geschlossenen umfänglichen Linienzügen ergeben, bei den die Dichtheit erreicht ist.

Durch die Wahl eines nichtlinearen kontinuierlichen Abschnitts kann das erfindungsgemäße Stecksystem bei Einhaltung der Dichtheitsbedingungen in jeder Montageposition, also sowohl vertikal als auch horizontal, verlegt werden, da es immer einen geschlossenen umfänglichen Linienzug gibt, auf dem eine bestimmte Kraft überschritten wird, so dass die Dichtheitsanforderungen erfüllt ist.

Weiterhin kann durch eine geeignete Wahl erreicht werden, dass das erfindungsgemäße Rohrsystem weiterhin die Möglichkeit bietet auch Rohre, die in ihren Achsen nicht kollinear sind, mit Hilfe einer gelenkartige Verbindung zu verbinden bei gleichzeitiger Erfüllung der Anforderungen an die Dichtheit.

Wenn z.B. der Abschnitt des Einsteckteils kürzer als der Abschnitt des Muffenteils ist, die Aufweitung des Einsteckteils schnell auf das Rohr des Einsteckteils übergeht und die Aufnahme entfällt oder kurz ist und / oder gegenüber dem erreichten Durchmesser am Ende des Abschnitts des Muffenteils verbreitert ist, so können auch Rohre deren Achsenausrichtung nicht übereinstimmt, also Rohre, die nicht kollinear sind, ineinandergeführt werden.

Bei geeigneter Gestaltung der Abschnitte, z.B. wenn die Abschnitte einen festen Radius aufweisen, schließen die beiden Rohrenden formschlüssig aneinander und bieten die geforderte Dichtigkeit, auch wenn die Achsen der Rohre nicht kollinear sind.

Beim Einführen eines Rohrendes eines Einsteckteils in ein entsprechendes Muffenteil zentriert sich das Rohrende durch geeignete nichtlineare kontinuierliche Abschnitte des Muffenteils erheblich schneller als bei einem linearen, konischen Abschnitt.

Da das erfindungsgemäße Rohrsystem durch seinen mechanisch-konstruktiven Aufbau bereits zu einer ausreichenden Dichtheit sowohl im horizontalen als auch im vertikalen Betrieb führt, kann auf weitere Elemente, die zur Erreichung einer geforderten Dichtigkeit führen, verzichtet werden.

Insbesondere sind keine weiteren Klemmelemente zur Einhaltung der Dichtigkeit erforderlich. Klemmelemente können jedoch in vibrationsgefährdeten Umgebungen zur unterstützenden Stabilisierung der Verbindung eingesetzt werden. Weiterhin kann auch auf den Einsatz anderer, teilweiser starken Angriffs- und / oder Alterungsprozessen unterliegenden Dichtelemente, wie z.B. Dichtlippen, Dichtringe oder Dichtpasten auf unterschiedlicher Basis verzichtet werden.

Weiterhin wird für den Aufbau eines erfindungsgemäßen Rohrsystems kein weiteres Presswerkzeug zur Aufweitung benötigt, um eine Klemmdichtung zu erstellen.

Durch die nichtlineare kontinuierliche Form der Abschnitte verteilen sich Krafteinwirkungen, z.B. durch transporttypische Stöße, besser auf die Gesamtstruktur. Da diese variiert, werden solche Einwirkungen mechanisch besser aufgenommen und es kommt zu keiner wesentlichen, die Dichtheit gefährdenden, dauerhaften plastischen Verformung.

Weiterhin ergibt sich, dass auch bei leichten Beschädigungen noch eine wirksame Dichtheit erreicht wird, da bereits ein einziger geschlossener umfänglicher Linienzug aus einer Vielzahl von geschlossenen umfänglichen Linienzüge zur Erfüllung der Dichtheit führt.

Das erfindungsgemäße Stecksystem bietet die Möglichkeit die Rohre von selbsthemmend bis leicht lösbar sowohl in horizontaler als auch vertikaler Ausrichtung zu verbinden. Dies kann durch geeignete Wahl der nichtlinearen kontinuierlichen Abschnitt, z. B. durch Wahl eines entsprechenden Radius bewerkstelligt werden.

Weiterhin kann das erfindungsgemäße Stecksystem eine Sicke aufweisen, die als Kapillarsperre und / oder als Feuchtigkeitssammler dient und einen Austritt von Kondensat verhindert.

Weiterhin kann die Aufnahme des Muffenteils so ausgeführt sein, dass sie als Anschlagslinie für die Anbringung und Ausrichtung eines Klemmbandes dient, falls die Anbringung eines solchen Bandes erforderlich sein sollte.

Weiterhin kann die Aufnahme des Muffenteils so ausgeführt sein, dass sie Toleranzen, z.B. fertigungsbedingte Toleranzen, und / oder Beschädigungen, z.B. Transportschäden, des Einsteckteils aufnimmt.

Weiterhin kann das Rohrende des Einsteckteil einen zylindrischen Abschnitt aufweisen, der zu einer weiteren Versteifung des Rohres und insbesondere des nichtlinearen kontinuierlichen Abschnitts führt.

Als Basismaterial wird Stahl und insbesondere Edelstahl bevorzugt, jedoch sind andere metallische Werkstoffe auch denkbar.

Weiterhin bevorzugt ist, dass die Rohre aus einem flächenhaften Material durch Stanzen oder Schneiden in einer Rohform herausgearbeitet werden und in weiteren Schritten zu Rohrrohlingen gebogen und verschweißt werden. Weitere Schritte umfassen das Umformen der Rohrenden zu den vorbenannten nichtlinearen kontinuierlichen Abschnitten.

Die vorgenannten Systeme können sowohl ein- als auch doppelwandig ausgeführt sein und bei einer doppelwandigen Ausführung entweder mit isolierenden Material und / oder der Möglichkeit zur Führung eines weiteren Gases vorgesehen sein.

Bei einer doppelwandigen Ausführung können Innenrohre und Außenrohre unterschiedliche oder gleiche Krümmung aufweisen.

Bei doppelwandigen Rohren kann zusätzliche eine Stabilisierung zwischen den Rohren eingefügt werden, entweder durch Einbringen eines Isolationsmaterials, oder durch Abstandshalter.

Typische Isolationsmaterialien sind z.B. Mineralfasern, Keramikgewebe, Keramikvlies, oder dergleichen hergestellt. Als bevorzugtes Material zur Isolierung wird Mineralfaserbasiertes Isolationsmaterial bevorzugt.

Das erfindungsgemäße Rohrsystem ist für sämtliche Nennweiten, die für die Abgas- oder Lüftungsanlagen gemäß technischer Auslegung / Berechnung erforderlich sind, anwendbar.

Anhand der Zeichnung wird die Erfindung nachstehend eingehend erläutert.

Es zeigt:
- Fig. 1a ein Einsteckteil einer Ausführungsform A der Erfindung,
- Fig. 1b ein Muffenteil einer Ausführungsform A der Erfindung,
- Fig. 2a ein Einsteckteil einer Ausführungsform B der Erfindung,
- Fig. 2b ein Muffenteil einer Ausführungsform B der Erfindung,
- Fig. 3a ein Einsteckteil einer Ausführungsform C der Erfindung,
- Fig. 3b ein Muffenteil einer Ausführungsform C der Erfindung,
- Fig. 4 ein Einsteck- und Muffenteil einer Ausführungsform D der Erfindung,

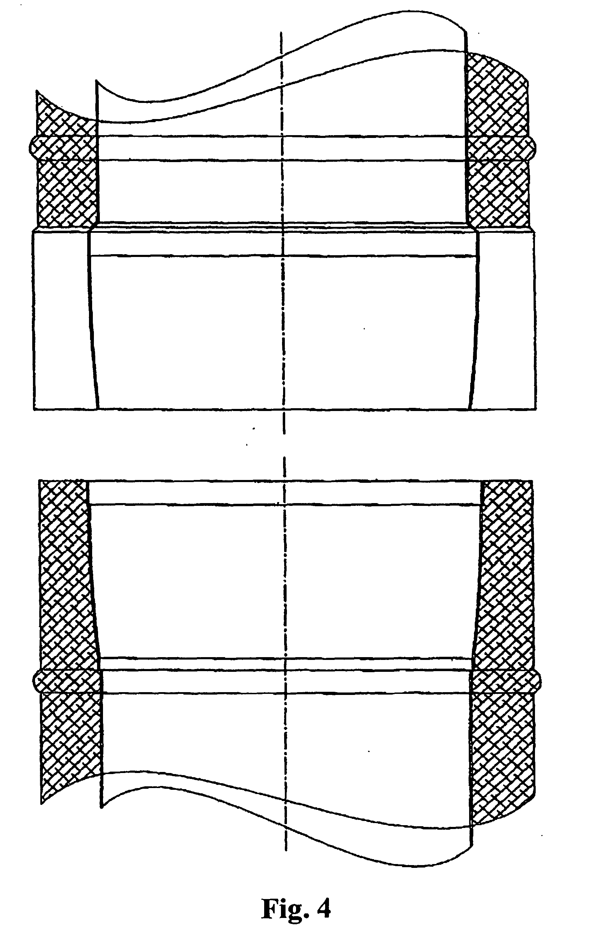

- Fig. 4 ein Einsteck- und Muffenteil einer Ausführungsform E der Erfindung.

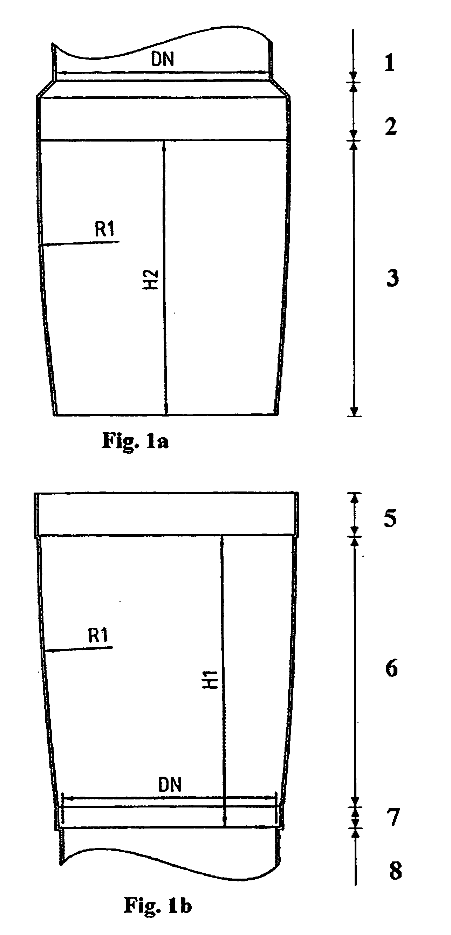

In Fig. 1a ist ein Einsteckteil und in Fig. 1b ein entsprechendes Muffenteil einer Ausführungsform A dargestellt.

Das Einsteckteil ist das Endstück eines Rohres 1 mit einem Nennquerschnitt DN und weist ein über den Nennquerschnitt DN erweitertes Ende 2,3 auf. Die Ausgestaltung der Aufweitung 2 vom Nenndurchmesser DN auf den Abschnitt kann in geeigneter Weise erfolgen und ist nur exemplarisch als abschnittsweise lineare Aufweitung gezeigt. An die Aufweitung 2 schließt sich ein Bereich mit einem nichtlinearen, kontinuierlichen Abschnitt 3 an.

Bevorzugt weist der Abschnitt 3 eine konstante Krümmung auf, d.h. der Abschnitt bildet einen Ausschnitt eines Kreises. Der Abschnitt hat einen festen Außen-Radius R1 und die Länge H2.

Entsprechend kann man den Raumkörper der durch die Rotation dieser Kreisabschnitts um die Rohrachse entsteht als Kugelsegment beschreiben.

Das Muffenteil ist das Endstück eines Rohres 8 mit dem Nennquerschnitt DN, wie in Fig. 1b gezeigt, und weist ein über den Nennquerschnitt DN erweitertes Ende 7,6,5 auf. Die Ausgestaltung des Aufweitung 7 vom Nenndurchmesser DN auf den Abschnitt kann in geeigneter Weise erfolgen ist nur exemplarisch als abschnittsweise lineare Aufweitung gezeigt. Z.B. könnte die Aufweitung 7 auch eine Sicke als Kapillarsperre aufweisen. An die Aufweitung 7 schließt sich ein Bereich mit einem nichtlinearen, kontinuierlichen Abschnitt 6 an.

Bevorzugt weist der Abschnitt 6 eine konstante Krümmung auf, d.h. der Abschnitt bildet einen Ausschnitt eines Kreises. Der Abschnitt hat einen festen Innen-Radius R1 und die Länge H1.

Entsprechend kann man den Raumkörper der durch die Rotation dieser Kreisabschnitts um die Rohrachse entsteht als Kugelsegment beschreiben.

Weiterhin kann das Muffenteil eine Aufnahme 5 am oberen Ende aufweisen. Die Ausgestaltung der Aufnahme 5 kann in geeigneter Weise erfolgen ist nur exemplarisch als abschnittsweise linear gezeigt. In der vorliegenden Ausführungsform ist die Aufnahme 5 des Muffenteils so ausgeführt, dass sie als Anschlagslinie für die Anbringung und Ausrichtung eines Klemmbandes dient, falls die Anbringung eines solchen Bandes erforderlich sein sollte. Weiterhin erlaubt die Ausführung der Aufnahme 5 des Muffenteils so ausgeführt sein, dass sie Toleranzen, z.B. fertigungsbedingte Toleranzen, und / oder Beschädigungen, z.B. Transportschäden, des Einsteckteils beim Einstecken aufnimmt.

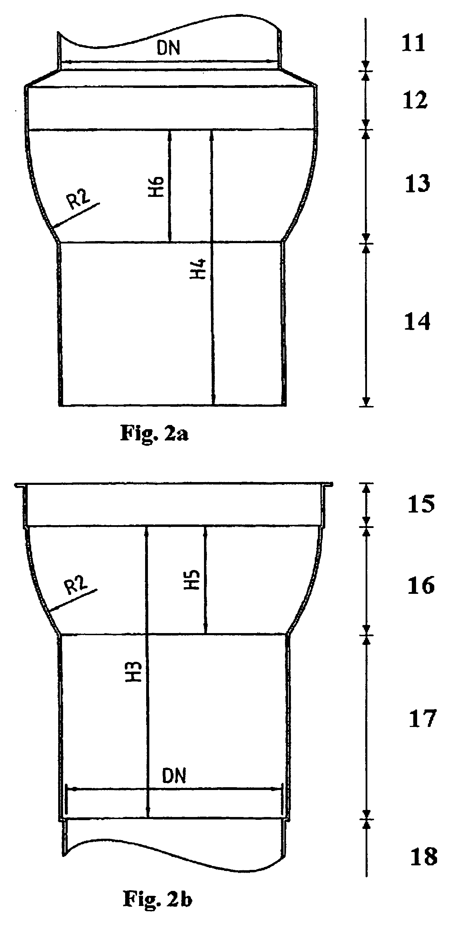

In Fig. 2a ist ein Einsteckteil und in Fig. 2b ein entsprechendes Muffenteil einer Ausführungsform B dargestellt.

Das Einsteckteil ist das Endstück eines Rohres 11 mit einem Nennquerschnitt DN und weist ein über den Nennquerschnitt DN erweitertes Ende 12,13,14 auf. Die Ausgestaltung der Aufweitung 12 vom Nenndurchmesser DN auf den Abschnitt kann in geeigneter Weise erfolgen ist nur exemplarisch als abschnittsweise lineare Aufweitung gezeigt. An die Aufweitung 12 schließt sich ein Bereich mit einem nichtlinearen, kontinuierlichen Abschnitt 13 an.

Bevorzugt weist der Abschnitt 13 eine konstante Krümmung auf, d.h. der Abschnitt bildet einen Ausschnitt eines Kreises. Der Abschnitt hat einen festen Außen-Radius R2 und die Länge H6.

Entsprechend kann man den Raumkörper der durch die Rotation dieser Kreisabschnitts um die Rohrachse entsteht als Kugelsegment beschreiben.

Weiterhin kann das Einsteckteil einen zylindrischen Abschnitt 14 am unteren Ende aufweisen. Die Ausgestaltung des Abschnitt 14 ist ein zylindrischer Abschnitt mit einer Länge, die sich aus der Differenz von H4 und H6 ergibt. Der zylindrische Abschnitt 14 weist den Nenndurchmesser DN auf. Der zylindrische Abschnitt 14 kann in seiner Länge (H4-H6) kürzer sein als der Abschnitt 13. Die Längendimensionierung erfolgt nur exemplarisch, andere geeignete Längendimensionierung sind auch möglich. Die vorliegende Ausführungsform des zylindrischen Abschnitt 14 dient einer weiteren Versteifung des Rohres, um das Rohrende und insbesondere den nichtlinearen, kontinuierlichen Abschnitt 13 weitergehend vor Beschädigungen und Verformungen, z.B. durch Transportschäden zu schützen.

Das Muffenteil, wie in Fig. 2b dargestellt, ist das Endstück eines Rohres 18 mit dem Nennquerschnitt DN und weist ein über den Nennquerschnitt DN erweitertes Ende 17,16,15 auf.

Die Ausgestaltung des Aufweitung 17 vom Nenndurchmesser DN auf den erweiterten Teil kann in geeigneter Weise erfolgen ist nur exemplarisch als abschnittsweise lineare Aufweitung gezeigt. Weiterhin weist die Aufweitung eine Länge auf, die sich aus der Differenz von H3 und H5 ergibt. Die Aufweitung 17 weist einen Durchmesser auf, der größer als der Nenndurchmesser DN ist. Bevorzugt weist sie einen Durchmesser auf, der sich als passend für den Abschnitt 14 ergibt. Die Aufweitung 17 kann in ihrer Länge (H3-H5) kürzer sein als der Abschnitt 16. Die Längendimensionierung erfolgt nur exemplarisch, andere geeignete Längendimensionierung sind auch möglich. Weiterhin könnte die Aufweitung 17 auch eine Sicke als Kapillarsperre aufweisen.

An die Aufweitung 17 schließt sich ein Bereich mit einem nichtlinearen, kontinuierlichen Abschnitt 16 an.

Bevorzugt weist der Abschnitt 16 eine konstante Krümmung auf, d.h. der Abschnitt bildet einen Ausschnitt eines Kreises. Der Abschnitt hat einen festen Innen-Radius R1 und hat die Länge H5.

Entsprechend kann man den Raumkörper der durch die Rotation dieser Kreisabschnitts um die Rohrachse entsteht als Kugelsegment beschreiben.

Weiterhin weist das Muffenteil eine Aufnahme 15 am oberen Ende auf. Die Ausgestaltung des Aufnahme 15 kann in geeigneter Weise erfolgen ist nur exemplarisch als abschnittsweise lineare Aufnahme gezeigt. In der vorliegenden Ausführungsform ist die Aufnahme 15 des Muffenteils so ausgeführt, dass sie als Anschlagslinie für die Anbringung und Ausrichtung eines Klemmbandes dient, falls die Anbringung eines solchen Bandes erforderlich sein sollte. Weiterhin erlaubt die Ausführung der Aufnahme 15 des Muffenteils so ausgeführt sein, dass sie Toleranzen, z.B. fertigungsbedingte Toleranzen, und / oder Beschädigungen, z.B. Transportschäden, des Einsteckteils beim Einstecken aufnimmt.

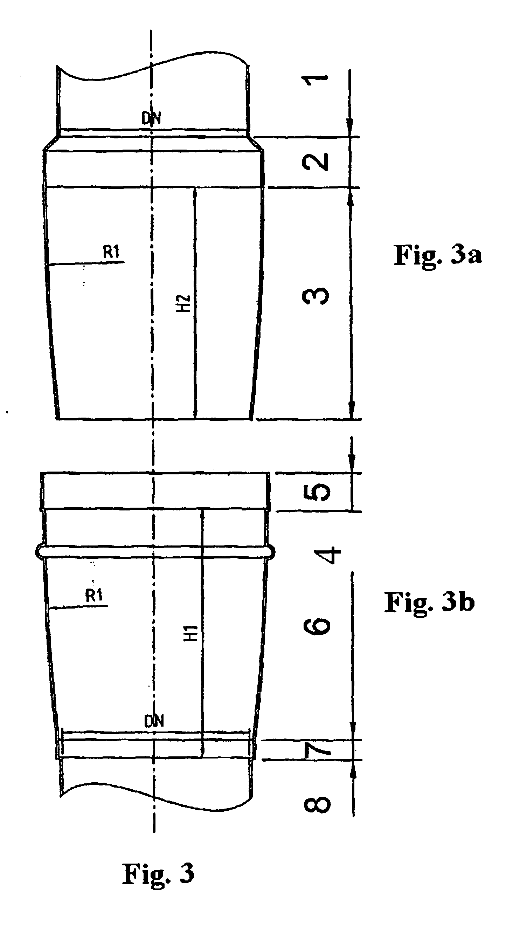

In Fig. 3a ist ein Einsteckteil und in Fig. 3b ein entsprechendes Muffenteil einer Ausführungsform C dargestellt, das sich von der Ausführungsform A lediglich dadurch unterscheidet, dass eine Kapillarsperre 4 im Abschnitt 6 des Muffenteils vorgesehen ist..

Fig. 4 zeigt eine Ausführungsform D der Erfindung, die ein doppelwandiges Stecksystem betrifft. Bei dieser Ausführungsform sind die Rohre des Einsteck- und des Muffenteils, Innen- sowie Außenrohr, als zylindrische Rohre ausgestaltet. Die Verbindung des Stecksystems würde generell mittels eines nicht gezeigten Klemmbandes realisiert werden.

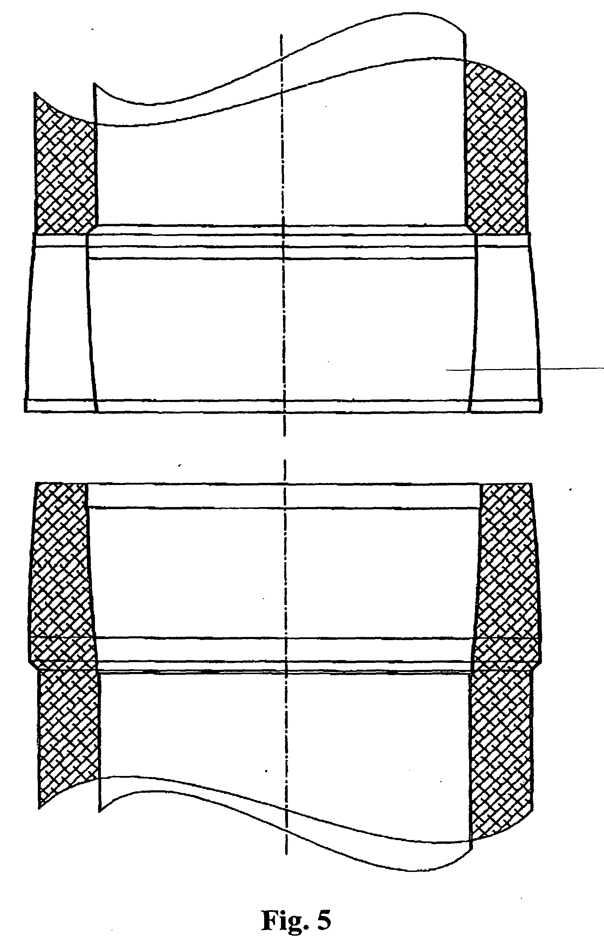

Fig. 5 zeigt eine weitere Ausführungsform E eines doppelwandigen Stecksystems. Bei dieser Ausführungsform sind die Rohre des Einsteck- und des Muffenteils durch eine selbsthemmende Formgebung gekennzeichnet.

Die Erfindung stellt somit ein Rohrsystem mit einer formschlüssigen metallischen Dichtung zur Verfügung, da die Abschnitte 3 und 6 bzw. 13 und 16 beim Ineinanderführen durch die Wahl identischer Kurvenverläufe formschlüssig aneinander liegen. Dabei wird die Dichtheit durch eine Vielzahl von geschlossenen umfänglichen Kurvenzügen realisiert.

Durch Wahl eines nichtlinearen kontinuierlichen Abschnittes ergibt sich, dass in allen Punkt auf der Kurve beim Anliegen eines Abschnittes eines Einsteckteils 3 bzw. 6 an den entsprechenden Abschnitt eines Muffenteils 13 bzw. 16 sowohl eine axiale als auch eine radiale Kraftkomponente vorhanden ist, die sich von benachbarten Punkt unterscheidet.

Weiterhin kann durch eine geeignete Wahl der Aufweitungen 2 und Aufnahme 5 und der Höhen H1 und H2 der Abschnitte 3 und 6 erreicht werden, dass das erfindungsgemäße Rohrsystem weiterhin die Möglichkeit bietet auch Rohre, die in ihren Achsen nicht kollinear sind, mit Hilfe einer gelenkartige Verbindung zu verbinden bei gleichzeitiger Erfüllung der Anforderungen an die Dichtheit. Wenn z.B. der Abschnitt H2 kürzer als der Abschnitt H1 ist, die Aufweitung 2 schnell auf den Nenndurchmesser DN des Rohrs 1 übergeht und die Aufnahme 5 entfällt oder kurz ist und / oder sich gegenüber dem erreichten Durchmesser am Ende des Abschnittes 6 verbreitert ist, so können auch Rohre deren Achsenausrichtung nicht übereinstimmt ineinandergeführt werden. Bei geeigneter Kurvenwahl, z.B. wenn die Kurve der Abschnitte 3 und 6 einen festen Radius R1 aufweisen, schließen die beiden Rohrenden formschlüssig aneinander und bieten die geforderte Dichtigkeit.

Beim Einführen eines Rohrendes 3 bzw. 14 in ein entsprechendes Muffenteil zentriert sich das Rohrende durch einen geeigneten nichtlinearen kontinuierlichen Abschnitt des Abschnittes 6 bzw. 16 erheblich schneller als bei einer linearen Kurve.

Da das erfindungsgemäße Rohrsystem durch seinen mechanisch-konstruktiven Aufbau bereits zu einer ausreichenden Dichtheit sowohl im horizontalen als auch im vertikalen Betrieb führt, kann auf weitere Elemente, die zur Erreichung einer geforderten Dichtigkeit führen, verzichtet werden.

Insbesondere sind keine weiteren Klemmelemente erforderlich. Weiterhin kann auch auf den Einsatz anderer, teilweiser starken Angriffs- und / oder Alterungsprozessen unterliegenden Dichtelemente, wie z.B. Dichtlippen, Dichtringe oder Dichtpasten auf unterschiedlicher Basis verzichtet werden.

Weiterhin wird für den Aufbau eines erfindungsgemäßen Rohrsystems kein weiteres Presswerkzeug zur Aufweitung benötigt.

Durch die nichtlineare kontinuierliche Form der Abschnitte 3,13,6,16 verteilen sich Krafteinwirkungen, z.B. durch transporttypische Stöße, besser auf die Gesamtstruktur.

Da diese nichtlinear ist, werden solche Einwirkungen mechanisch besser aufgenommen und es kommt zu keiner wesentlichen, die Dichtheit gefährdenden, dauerhaften plastischen Verformung.

### Bezugszeichenliste

1. Rohr, Einsteckteil
2. Aufweitung, Einsteckteil
3. nichtlinearer kontinuierlicher Abschnitt, Einsteckteil
4. Kapillarsperre
5. Aufnahme, Muffenteil
6. nichtlinearer kontinuierlicher Abschnitt; Muffenteil
7. Aufweitung, Muffenteil
8. Rohr, Muffenteil
9.
10.
11. Rohr, Einsteckteil
12. Aufweitung, Einsteckteil
13. nichtlinearer kontinuierlicher Abschnitt, Einsteckteil
14. zylindrischer Abschnitt, Muffenteil
15. Aufnahme, Muffenteil
16. nichtlinearer kontinuierlicher Abschnitt; Muffenteil
17. Aufweitung, Muffenteil
18. Rohr, Muffenteil

## Patentansprüche

1. Stecksystem für einwandige Rohrverbindungen zur Verwendung in der Abgas-, Lüftungs- oder Klimatechnik, wobei ein Ende eines einwandigen Rohrs als Einsteckteil (1,2,3) und ein Ende eines anderen einwandigen Rohrs als Muffenteil (5,6,7,8) ausgebildet ist und im zusammengesteckten Zustand sich in einem Bereich (3, 6) überschneiden,
**dadurch gekennzeichnet, dass**
sowohl das Einsteckteil (1,2,3) als auch das Muffenteil (5,6,7,8) in diesem Bereich einen nichtlinearen kontinuierlichen Abschnitt (3,6) aufweisen,
wobei die nichtlinearen kontinuierlichen Abschnitte zur Dichtung der Rohrverbindung durch direkten Kontakt der inneren Oberfläche des nichtlinearen kontinuierlichen Abschnitts des Muffenteils (5,6,7,8) mit der äußeren Oberfläche des nichtlinearen kontinuierlichen Abschnitts des Einsteckteils (1,2,3) dienen.

2. Stecksystem für doppelwandige Rohrverbindungen zur Verwendung in der Abgase-, Lüftungs- oder Klimatechnik, wobei ein Ende eines doppelwandigen Rohrs als Einsteckteil (11,12,13) und ein Ende eines anderen doppelwandigen Rohrs als Muffenteil (15,16,17,18) ausgebildet ist und im zusammengesteckten Zustand sich in einem Bereich (3, 6) überschneiden,
**dadurch gekennzeichnet, dass**
sowohl das Einsteckteil (11,12,13) als auch das Muffenteil (15,16,17,18) in diesem Bereich einen nichtlinearen kontinuierlichen Abschnitt (13,16) aufweisen, wobei die nichtlinearen kontinuierlichen Abschnitte zur Dichtung der Rohrverbindung durch direkten Kontakt der inneren Oberfläche des nichtlinearen kontinuierlichen Abschnitts des Muffenteils (5,6,7,8) mit der äußeren Oberfläche des nichtlinearen kontinuierlichen Abschnitts des Einsteckteils (1,2,3) dienen.

3. Stecksystem für doppelwandige Rohrverbindungen gemäß Anspruch 2, **dadurch gekennzeichnet, dass** der nichtlinearen kontinuierlichen Abschnitt der Innenrohre (13) und Außenrohre (16) gleiche Krümmung aufweist.

4. Stecksystem für doppelwandige Rohrverbindungen gemäß Anspruch 2, **dadurch gekennzeichnet, dass** der nichtlinearen kontinuierlichen Abschnitt der Innenrohre (13) und Außenrohre (16) ungleiche Krümmungen aufweisen.

5. Stecksystem für Rohrverbindungen gemäß einem der vorhergehenden Ansprüche 1 bis 4, **dadurch gekennzeichnet, dass** der nichtlinear kontinuierliche Abschnitt (3,6;13,16) eine konstante Krümmung aufweist.

6. Stecksystem für Rohrverbindungen gemäß einem der vorhergehenden Ansprüche 1 bis 4, **dadurch gekennzeichnet, dass** der nichtlinear kontinuierliche Abschnitt (3,6;13,16) eine sich monoton ändernde Krümmung aufweist.

7. Stecksystem für Rohrverbindungen gemäß einem der vorhergehenden Ansprüche, **dadurch gekennzeichnet, dass** die Rohre aus Stahl, vorzugsweise Edelstahl sind.

## Claims

1. Connection system for single wall pipe joints used in exhaust, ventilation, or air conditioning technology, in which a end of a single wall pipe is formed as a plug in part (1, 2, 3) and a end of a other single wall pipe is formed as a sleeve part (5, 6, 7, 8) and in which both, when being joined together, overlap in a region (3, 6),
**characterized in that**
both the plug in part (1, 2, 3) and the sleeve part (5, 6, 7, 8), in said region, comprise a non-linear continuous section (3, 6), in which the non-linear continuous sections serve for sealing the pipe joint through direct contact of the inner surface of the non-linear continuous section of the sleeve part (5, 6, 7, 8) with the outer surface of the non-linear continuous section of the plug in part (1, 2, 3).

2. Connection system for dual wall pipe joints used in exhaust, ventilation, or air conditioning technology, in which a end of a dual wall pipe is formed as a plug in part (11, 12, 13) and a end of a other dual wall pipe is formed as a sleeve part (15, 16, 17, 18) and in which both, when being joined together, overlap in a region (3, 6),
**characterized in that**
both the plug in part (11, 12, 13) and the sleeve part (15, 16, 17, 18), in said region, comprise a non-linear continuous section (13, 16), in which the non-linear continuous sections serve for sealing the pipe joint through direct contact of the inner surface of the non-linear continuous section of the sleeve part (5, 6, 7, 8) with the outer surface of the non-linear continuous section of the plug in part (1, 2, 3).

3. Connection system for dual wall pipe joints according to claim 2, **characterized in that** the non-linear continuous section of the inner pipes (13) and the non-linear continuous section of the outer pipes (16) have equal curvature.

4. Connection system for dual wall pipe joints according to claim 2, **characterized in that** the non-linear continuous section of the inner pipes (13) and the non-linear continuous section of the outer pipes (16) have unequal curvature.

5. Connection system for pipe joints according to one of the preceding claims 1 to 4, **characterized in that** the non-linear continuous section (3, 6; 13, 16) has a constant curvature.

6. Connection system for pipe joints according to one of the preceding claims 1 to 4, **characterized in that** the non-linear continuous section (3, 6; 13, 16) has a monotonously changing curvature.

7. Connection system for pipe joints according to one of the preceding claims, **characterized in that** the pipes are made of steel, preferably stainless steel.

## Revendications

1. Système d'emboîtage pour raccords de tube à paroi simple destiné à être utilisé dans la technique d'échappement, d'aération ou de climatisation, sachant qu'une extrémité d'un tube à paroi simple est réalisée comme élément emboîtable (1, 2, 3) et une extrémité d'un autre tube à paroi simple est réalisée comme élément manchon (5, 6, 7, 8), et qu'à l'état emboîté lesdites extrémités se chevauchent dans une zone (3, 6), **caractérisé en ce que** non seulement l'élément emboîtable (1, 2, 3) mais également l'élément manchon (5, 6, 7, 8) comportent dans cette zone une section (3, 6) continue non linéaire, les sections continues non linéaires servant à l'étanchéité du raccord de tube par contact direct de la surface intérieure de la section continue non linéaire de l'élément manchon (5, 6, 7, 8) avec la surface extérieure de la section continue non linéaire de l'élément emboîtable (1, 2, 3).

2. Système d'emboîtage pour raccords de tube à double paroi destiné à être utilisé dans la technique d'échappement, d'aération ou de climatisation, sachant qu'une extrémité d'un tube à double paroi est réalisée comme élément emboîtable (11, 12, 13) et une extrémité d'un autre tube à double paroi est réalisée comme élément manchon (15, 16, 17, 18), et qu'à l'état emboîté lesdites extrémités se chevauchent dans la zone (3, 6), **caractérisé en ce que** non seulement l'élément emboîtable (11, 12, 13) mais également l'élément manchon (15, 16, 17, 18) comportent dans cette zone une section (13, 16) continue non linéaire, les sections continues non linéaires servant à l'étanchéité du raccord de tube par contact direct de la surface intérieure de la section continue non linéaire de l'élément manchon (5, 6, 7, 8) avec la surface extérieure de la section continue non linéaire de l'élément emboîtable (1, 2, 3).

3. Système d'emboîtage pour raccords de tube à double paroi selon la revendication 2, **caractérisé en ce que** la section continue non linéaire des tubes intérieurs (13) et des tubes extérieurs (16) comporte la même courbure.

4. Système d'emboîtage pour raccords de tube à double paroi selon la revendication 2, **caractérisé en ce que** la section continue non linéaire des tubes intérieurs (13) et des tubes extérieurs (16) comporte des courbures différentes.

5. Système d'emboîtage pour raccords de tube selon l'une quelconque des revendications précédentes 1 à 4, **caractérisé en ce que** la section continue non linéaire (3, 6 ; 13, 16) comporte une courbure constante.

6. Système d'emboîtage pour raccords de tube selon l'une quelconque des revendications précédentes 1 à 4, **caractérisé en ce que** la section continue non linéaire (3, 6 ; 13, 16) comporte une courbure variant de façon monotone.

7. Système d'emboîtage pour raccords de tube selon l'une quelconque des revendications précédentes, **caractérisé en ce que** les tubes sont en acier, de préférence en acier spécial.
